# EUROPEAN PATENT APPLICATION

(11) **EP 2 428 895 A1**
(43) Date of publication of application: **14.03.2012**
(21) Application number: 09846009.0
(22) Date of filing: 04.09.2009
(51) Int. Cl.: G06F 11/14

(54) **KEY INFORMATION AREA IN FILE SYSTEM MAINTAINING METHOD AND APPARATUS**

(30) Priority: 15.06.2009 CN 200910148313
(71) Applicant: ZTE Corporation, Shenzhen, Guangdong 518057 (CN)
(72) Inventor: XI, Zhijun, Guangdong 518057 (CN)
(74) Representative: Kling, Simone
(86) International application number: PCT/CN2009/073761
(87) International publication number: WO 2010/145095

(57) **Abstract**

A method and an apparatus for maintaining a key information area in a file system are provided, which can provide effective maintenance to the key information area in the file system used by a storage device, and be applied to maintaining various file systems. The method for maintaining a key information area in a file system comprises the following steps: backing up the key information area confirmed by a user in the file system when the file system used by a storage device is hooked for the first time, and creating a device list as a backup index, wherein the device list is stored in an external storage device; and obtaining corresponding backup information to recover the key information area when the storage device is started exceptionally due to destroy of the key information area

## Description

### TECHNICAL FIELD

The present invention relates to the technical field of information, particularly to a method and an apparatus for maintaining a key information area in a file system used by a storage device.

### BACKGROUND

A storage device using a file system is prone to a failure, however, the failure is not often caused by the physical damage of the storage device itself, and largely due to an error of a related information area in the file system, such as partition table, directory entry, boot sector and the like. In the process of performing read and/or write operation to a file, if the related information area in the file system is damaged due to sudden power down of the system or other exceptions, the system may be incapable of identifying the storage device correctly when being reinitialized, which results in failure of initialization and that the file system cannot be hooked normally.

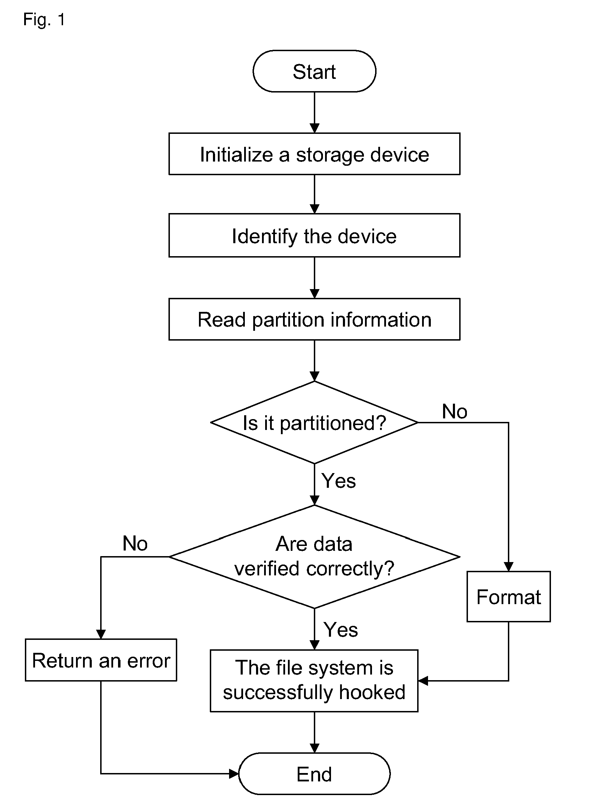

Fig. 1 shows a commonly used processing flow of hooking a file system. As shown in Fig. 1, if a device has been partitioned and damaged unexpectedly, an error may occur during data verification, and then the initialization cannot be passed. When the file system cannot be hooked normally, the file operations in an upper layer of the whole system cannot be performed.

At present, in order to solve the above problem, it generally needs to reformat the overall device, or even needs to completely replace the storage device sometimes, which inevitably results in loss of all the original data. Some specific systems are not allowed to be formatted during use, while the loss caused by data loss cannot be estimated.

A method for protecting a hard disk through freezing a key information area is proposed in the patent, in which the patent number is CN200510061933 and the title of the invention is 'Method for protecting hard disk key information area in embedded device'. Although the method can reduce the probability of failure to some extent, it has obvious deficiencies, which are mainly reflected in that: 1) the method is only applied to occasions that a file is fixed, and the file name and the file size cannot be modified after initialization, therefore the method cannot be applied to other occasions; 2) once the overall hard disk is initialized, a new file cannot be added; and 3) if a key information area is damaged unexpectedly, it cannot be repaired.

Therefore, it is very necessary to seek for a more reliable and effective method to solve the above problems.

A key information area in a file system generally refers to the area which plays a decisive role in the overall file system, and which has serious impact on all file information on a storage device, such as partition boot sector, file allocation table, file directory entry and the like.

### SUMMARY

The present invention is proposed by considering the problems existent in the prior art that the method for protecting a hard disk key information area is limited in use occasions, a new file cannot be added after initialization and a key information area which is damaged unexpectedly cannot be repaired. In view of this purpose, the present invention provides a method and an apparatus for maintaining a key information area in a file system. The method/apparatus can perform effective maintenance to the key information area in the file system used by a storage device, and are applied to maintaining various file systems used by the storage device. In the present invention, what specific information areas are the key information areas can be confirmed by a user specifically, and the user confirms the areas which are considered by himself to be important and which are needed to be maintained as the key information areas, and can modify this confirmation.

To solve the above-mentioned technical problems, the present invention provides a method for maintaining a key information area in a file system.

The method for maintaining a key information area in a file system according to the present invention comprises the following steps: backing up the key information area in the file system when the file system used by a storage device is hooked for the first time; and calling the backup information to recover the key information area when the storage device is started exceptionally due to destroy of the key information area.

Preferably, the method may further comprise: creating a backup index of the key information area, wherein the backup index may exist in a form of a device list, and may be stored in either a reserved sector of the storage device or other external storage devices.

In this way, when the same file system is used by more than one storage devices in sequence, it is more convenient to recover the key information area through the backup index.

Corresponding to the solution adopting the backup index, the step of recovering the key information area in the method of the present invention may specifically comprise:
1. acquiring the corresponding backup index through retrieving an ID of the current storage device when the storage device is started exceptionally; and
2. repairing damaged data by using complete data in a backup area.

To solve the above-mentioned technical problems, the present invention provides an apparatus for maintaining a key information area in a file system.

The apparatus for maintaining a key information area in a file system according to the present invention comprises: a key information area backup module and a key information area recovering module; wherein the key information area backup module is used for backing up the key information area in the file system when the file system used by a storage device is hooked for the first time, and the key information area recovering module is used for calling the backup information to recover the key information area when the storage device is started exceptionally due to destroy of the key information area.

Preferably, the key information area backup module may be further used for creating a backup index of the key information area, wherein the backup index may be stored in either a reserved sector of the storage device or other external storage devices.

By means of the technical solution provided by the present invention, the key information area in the file system of the storage device can be automatically protected and repaired, loss of all the data caused by reformatting of the system after an error occurs in a system is prevented, and the security of the overall system is greatly improved.

The technical solution of the present invention is applied to maintaining various file systems of the storage device, and has the following advantages: a kind of device just needs one backup, so that the execution efficiency is high; if the storage device is replaced in midway, the key information can be automatically identified and backed up; and the protection and repairing of various different storage devices can be supported simultaneously under the same system.

### BRIEF DESCRIPTION OF THE DRAWINGS

The drawings described here are used for providing a further understanding of the present invention, and constitute a part of the subject application. The illustrative embodiments and descriptions thereof of the present invention are used for interpreting the present invention, and do not constitute inappropriate limitations to the present invention. In the drawings:
Fig. 1 shows a schematic diagram of a commonly used processing flow of hooking a file system;
Fig. 2 shows a schematic diagram of a flow of a method for maintaining a key information area in a file system according to one embodiment of the present invention;
Fig. 3 shows a schematic diagram of a processing flow of automatically backing up key information according to one embodiment of the present invention; and
Fig. 4 shows a schematic diagram of a processing flow of automatically repairing key information according to one embodiment of the present invention.

### DETAILED DESCRIPTION

Functional overview

Considering the problems existent in the prior art, the embodiments of the present invention provide a solution for maintaining a key information area in a file system. The processing principle of the solution is: backing up the key information area in the file system when the file system used by a storage device is hooked for the first time; and calling the backup information to recover the key information area when the storage device is started exceptionally due to destroy of the key information area. The solution can automatically protect and repair the key information area in the file system of the storage device, prevent loss of all the data caused by reformatting of the system after the error occurs, and greatly improve the security of the overall system.

The present invention will be described in detail with reference to the drawings and embodiments.

### Method embodiment

By means of the method for automatically protecting and repairing the key information area in the file system in the present invention, the security of the system files is improved, the error probability of the file system is reduced, and data loss caused by formatting is prevented.

For a specific storage device, the physical size thereof is determined, therefore information thereof under the same file system (such as partition, system boot sector and the like) is determined. Just by taking advantage of this fact, when the key information area in the file system is damaged unexpectedly due to some external illegal operations or exceptions, the solution provided by the embodiment of the present invention can protect and repair the key information area in the file system.

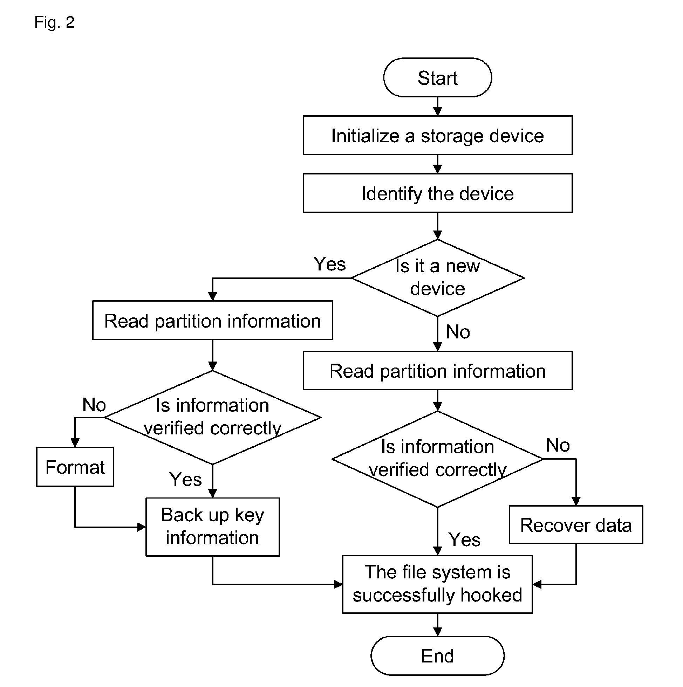

Fig. 2 shows a schematic diagram of a flow of a method for maintaining a key information area in a file system according to the embodiment of the present invention. As shown in Fig. 2, the method for maintaining the key information area in the file system of the present invention specifically comprises the following steps.
Step 201: starting this processing flow.
Step 202: initializing a storage device.
Step 203: entering a processing flow of backing up key information if the storage device is a new device, or executing step 204 if the storage device is an old device.
Step 204: reading and verifying device partition information.
Step 205: entering a processing flow of recovering key information if the verification is not passed.
Step 206: successfully hooking the file system after the above steps are completed.

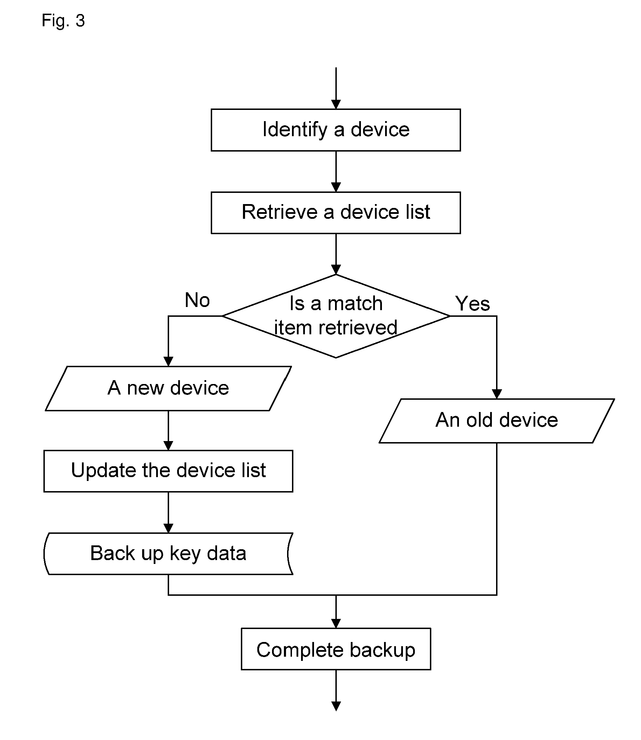

Fig. 3 shows a schematic diagram of a processing flow of automatically backing up key information according to the embodiment of the present invention. As shown in Fig. 3, the processing flow of automatically backing up the key information specifically comprises the following steps.
Step 301: starting this processing flow.
Step 302: issuing a command for identifying a device.
Step 303: identifying the current device as a new device if the current device is not retrieved in a backup index.

In the embodiment of the present invention, the backup index exists in the form of a device list, which can be stored in either an external storage device or in a reserved sector of the current device.
Step 304: updating the device list, newly adding an ID of the current device, and allocating a related area.
Step 305: reading key information of the device and writing the key information into the allocated data area.
Step 306: completing backup.

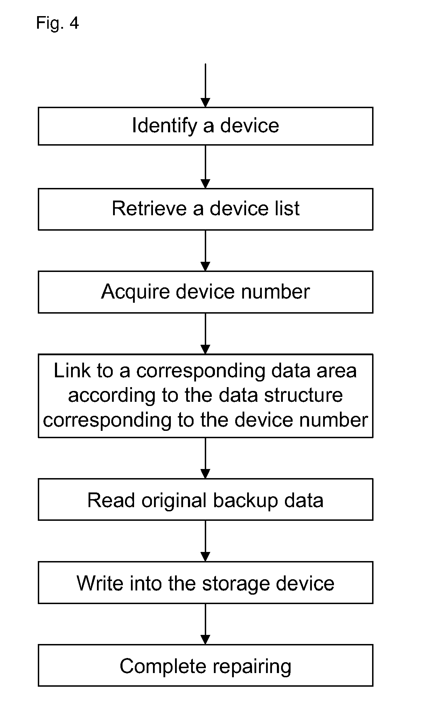

Fig. 4 shows a schematic diagram of a processing flow of automatically repairing key information according to the embodiment of the present invention. As shown in Fig. 4, the processing flow of automatically repairing the key information specifically comprises the following steps.
Step 401: starting this processing flow.
Step 402: issuing a command for identifying a device.
Step 403: retrieving the previously identified device in a device list.
Step 404: acquiring an ID number of the current device.
Step 405: linking to a corresponding backup data area according to the data structure corresponding to the ID number.
Step 406: reading contents in the data area and writing the contents into the address corresponding to the device.
Step 407: completing repairing.

According to the embodiment of the present invention, a computer readable medium, in which an instruction capable of being executed by a computer is stored, is further provided. When the instruction is executed by a computer or a processor, the computer or the processor is caused to execute the processing of respective steps as shown in Fig. 2 to Fig. 4, and preferably to execute one or more of the above embodiments.

### Apparatus embodiment

An apparatus for maintaining a key information area in a file system provided by the embodiment of the present invention specifically comprises: a key information area backup module and a key information area recovering module. When the file system used by a storage device is hooked for the first time, the key information area backup module backs up the key information area in the file system, and creates a device list which is used as a backup index of the key information area; when the storage device is started exceptionally due to destroy of the key information area, the key information area recovering module calls the backup information to recover the key information area.

In practical applications, what information areas in the file system are selected as the key information area to protect is completely determined by a user according to the requirements. For example, the user can select the key information area to be protected in the file system through modifying data structure of the device list item. The information areas to be maintained selected by the user according to the technical solution provided by the embodiment of the present invention all belong to the scope of the key information area referred to in the embodiment of the present invention, and such technical solution belongs to the protection scope of the present invention.

In addition, the present invention is implemented without modifying the system architecture and the current processing flow, is easy to be implemented, is convenient to be promoted in the technical field, and has stronger industrial applicability.

The purpose, technical solution and the beneficial effects of the present invention are further described in detail by the above-mentioned specific embodiments. It should be noted that, the above are only the preferred embodiments of the present invention, and those skilled in the art can make various modifications and deformations on the present invention without deviating from the spirit and scope of the present invention. In this way, if these modifications and deformations on the present invention fall within the scope of the technical solution recorded by the claims of the present invention and equivalent technologies thereof, these modifications and deformations are intended to be included in the present invention.

## Claims

1. A method for maintaining a key information area in a file system, comprising:
backing up the key information area in the file system when the file system used by a storage device is hooked for the first time; and
calling the backup information to recover the key information area when the storage device is started exceptionally due to destroy of the key information area.

2. The method for maintaining a key information area in a file system according to claim 1, further comprising: creating a backup index of the key information area.

3. The method for maintaining a key information area in a file system according to claim 2, wherein the backup index exists in a form of a device list.

4. The method for maintaining a key information area in a file system according to claim 2 or 3, wherein the backup index is stored in a reserved sector of the storage device.

5. The method for maintaining a key information area in a file system according to claim 2 or 3, wherein the backup index is stored in other external storage devices.

6. The method for maintaining a key information area in a file system according to claim 2 or 3, wherein the step of recovering the key information area specifically comprises:
A: acquiring the corresponding backup index through retrieving an ID of the current storage device when the storage device is started exceptionally; and
B: repairing damaged data by using complete data in a backup area.

7. An apparatus for maintaining a key information area in a file system, comprising:
a key information area backup module and a key information area recovering module; wherein, the key information area backup module is used for backing up the key information area in the file system when the file system used by a storage device is hooked for the first time; and
the key information area recovering module is used for calling the backup information to recover the key information area when the storage device is started exceptionally due to destroy of the key information area.

8. The apparatus for maintaining a key information area in a file system according to claim 7, wherein the key information area backup module is further used for creating a backup index of the key information area.

9. The apparatus for maintaining a key information area in a file system according to claim 8, wherein the backup index is stored in a reserved sector of the storage device.

10. The apparatus for maintaining a key information area in a file system according to claim 8, wherein the backup index is stored in other external storage devices.
